# FASCICULE DE BREVET EUROPEEN

(11) **EP 1 240 059 B1**
(45) Date de publication et mention de la délivrance du brevet: **30.08.2006**
(21) Numéro de dépôt: 00958590.2
(22) Date de dépôt: 21.07.2000
(51) Int. Cl.: B60R 25/02, B60R 16/02

(54) **SYSTEME ET PROCEDE DE VERROUILLAGE DE LA DIRECTION D'UN VEHICULE**
SYSTEM UND VERFAHREN ZUR SPERRUNG EINER FAHRZEUGLENKUNG
SYSTEM AND METHOD FOR LOCKING A VEHICLE STEERING

(30) Priorité: 28.07.1999 FR 9909816
(43) Date de publication de la demande: 18.09.2002
(73) Titulaire: Renault s.a.s., 92100 Boulogne Billancourt (FR); VALEO SECURITE HABITACLE, 94000 Créteil (FR)
(72) Inventeur: LOUVEL, Philippe, F-92350 Le Plessis-Robinson (FR); POULAIN, Patrick, F-78690 Les Essarts le Roi (FR); MOIZAN, Eric, F-78150 Le Chesnay (FR); MORILLON, Jacques, F-91300 Massy (FR); MOREAU, Patricia, F-75100 Paris (FR)
(74) Mandataire: Ballot, Paul Denis Jacques
(86) Numéro de dépôt international: PCT/FR2000/002114
(87) Numéro de publication internationale: WO 2001/007301

(56) Documents cités:
- WO-A-99/14085
- DE-A- 19 737 856
- DE-C- 19 741 438

## Description

L'invention concerne un système de verrouillage de la colonne de direction d'un véhicule à moteur, en particulier d'un véhicule automobile à combustion interne, à essence ou Diesel, destiné à jouer le rôle d'antivol électrique du véhicule.

Elle concerne aussi un procédé de mise en oeuvre de ce système de verrouillage et de déverrouillage.

Les caractéristiques du préambule de la revendication 1 sont généralement connues, voir par exemple WO99/14085 A1.

Les solutions connues actuellement utilisent deux microcontrôleurs électroniques qui travaillent conjointement pour des raisons de sécurité. Une telle solution est décrite dans la demande de brevet européen N° 0 496 509 A1, déposée au nom de LUCAS Industries Public Limited Company à propos d'un calculateur électronique de système d'antiblocage de roues ABS.

En effet, pour des raisons impératives de sécurité, un dispositif de verrouillage de la colonne de direction doit fonctionner de telle sorte qu'une simple panne, qu'elle soit logicielle ou matérielle, ne doit absolument pas entraîner un blocage fortuit de la direction alors que le véhicule est en phase de roulage. C'est pourquoi les systèmes actuels sont conçus avec un organe de sécurité qui comporte deux microcontrôleurs travaillant en tandem, c'est-à-dire se surveillant mutuellement pour éviter qu'une panne simple suffise à provoquer un blocage intempestif de la direction.

Le principal inconvénient est le coût élevé d'un tel système, car non seulement le microcontrôleur est dupliqué, mais aussi son horloge et son circuit de reset.

Le but de l'invention est de pallier cet inconvénient en proposant un système de verrouillage de la direction dont le fonctionnement est sécurisé par un dispositif de blocage des moyens de verrouillage proprement dit lorsque la colonne de direction doit être en position déverrouillée, notamment en roulage.

Pour cela, l'objet de l'invention est un système de verrouillage de la colonne de direction d'un véhicule, comprenant des moyens de verrouillage électro-mécanique en rotation de la colonne à partir d'un pène, pilotés par un circuit électronique de commande recevant des ordres d'un calculateur électronique par l'intermédiaire d'un bus multiplexé CAN, caractérisé en ce qu'il comporte de plus :
- des moyens de blocage du déplacement du pène lorsque la direction est en position déverrouillée, pilotés par le calculateur électronique au moyen d'un transistor de commande,
- un capteur de la position des moyens de blocage
- un capteur double de la position du pène,
- un circuit électronique de commande des moyens de verrouillage de la colonne de direction, comprenant un microcontrôleur qui reçoit d'une part l'information de position des moyens de blocage et d'autre part des informations à la fois sur la vitesse du véhicule, sur l'état du moteur et sur la détection de choc par l'intermédiaire du bus multiplexé CAN.

Selon une autre caractéristique de l'invention, les moyens de blocage mécanique du pène de verrouillage de la direction sont constitués par un noyau de fer doux destiné à se déplacer perpendiculairement à la direction de déplacement du pène, sous l'effet du champ magnétique créé à l'intérieur d'un solénoïde parcouru par un courant variable.

Un autre objet de l'invention est un procédé de fonctionnement du précédent système de verrouillage de la direction d'un véhicule, caractérisé en ce qu'il comporte les étapes suivantes :
a) pour le déverrouillage de la direction :
   - après identification du conducteur, envoi d'une commande de déverrouillage de la direction sur le bus multiplexé CAN par le calculateur électronique,
   - lecture de cette commande par le microcontrôleur des moyens de verrouillage et exécution immédiate,
   - surveillance des changements d'état sur les informations délivrées par les capteurs de position du pène et des moyens de blocage en vue d'un éventuel démarrage du moteur du véhicule,
b) pour le verrouillage de la direction :
   - envoi d'une commande de verrouillage sur le bus multiplexé CAN par le calculateur électronique,
   - lecture de ladite commande par le microcontrôleur des moyens de verrouillage,
   - après une temporisation, envoi par le transistor de commande du calculateur électronique d'une commande de déblocage du pène par les moyens de blocage,
   - vérification des conditions de sécurité par le microcontrôleur des moyens de verrouillage,
   - commande, par le microcontrôleur des moyens de verrouillage, du blocage de la direction par le pène.

D'autres caractéristiques et avantages de l'invention apparaîtront à la lecture de la description d'un système de verrouillage de direction, illustrée par les figures suivantes qui sont :
- la figure 1 : un schéma fonctionnel d'un système complet de verrouillage de la colonne de direction d'un véhicule, selon l'invention, en position déverrouillée ;
- les figures 2 et 3 : un schéma fonctionnel des moyens de verrouillage de la direction sécurisés par des moyens de blocage, respectivement en positions intermédiaire et verrouillée ;
- la figure 4 : un chronogramme du procédé de déverrouillage de la direction d'un véhicule ;
- la figure 5 : un chronogramme du procédé de verrouillage de la direction d'un véhicule.

Les éléments portant les mêmes références sur les différentes figures remplissent les mêmes fonctions en vue des même résultats.

Le système de verrouillage de la colonne de direction d'un véhicule, selon l'invention, comprend des moyens électro-mécaniques destinés à empêcher la rotation de la direction alors que le véhicule est à l'arrêt, moteur arrêté en conditions normales et non en état d'accident. Ces moyens de verrouillage sont essentiellement constitués d'une pièce mobile munie d'un pène qui vient s'engager dans une roue crantée de la colonne pour l'empêcher de tourner. Mais ce mouvement du pène vers la position de verrouillage de la colonne de direction ne doit jamais se produire en dehors des conditions de sécurité bien définies et strictes. Pour cela, l'invention prévoit d'adjoindre des moyens de blocage mécanique du pène, lorsque ce dernier doit impérativement laisser libre en rotation la direction pour sécuriser le système.

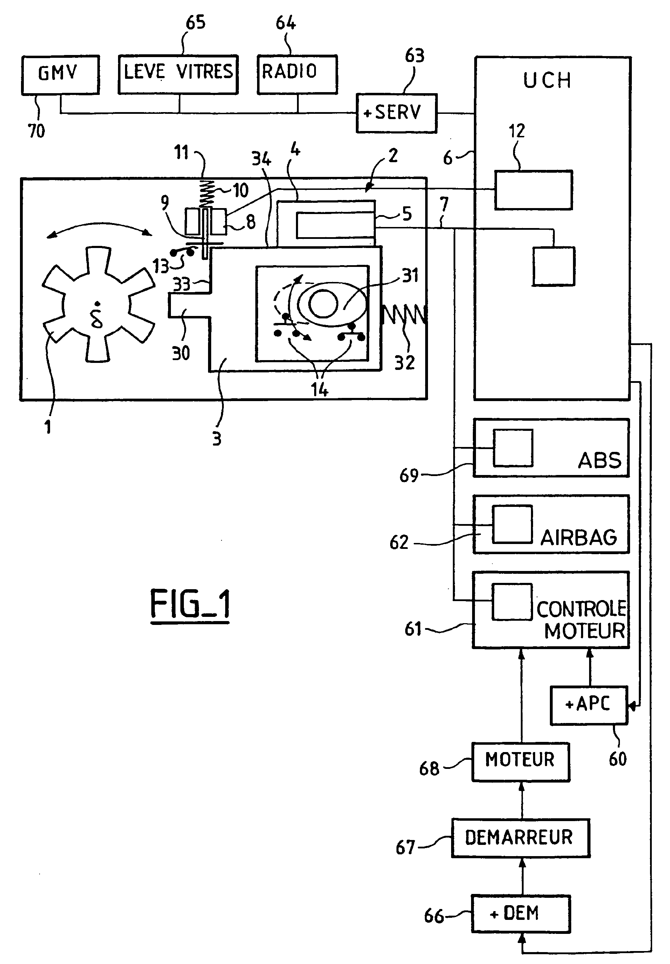

Selon le schéma fonctionnel de la figure 1, la colonne de direction 1 doit pouvoir tourner librement autour de son axe de rotation δ, perpendiculaire au plan du dessin, en position déverrouillée. Des moyens de verrouillage 2 comprennent notamment une pièce mécanique 3 munie d'un pène 30 et mobile selon une direction orthogonale à l'axe δ de rotation de la colonne de direction sous l'effet d'un mouvement de rotation d'un excentrique 31. Un ressort 32 est destiné à pousser la pièce 3 pour que le pène 30 empêche cette rotation lorsque les moyens 2 en reçoivent l'ordre. Pour cela, ces moyens de verrouillage 2 sont pilotés par un circuit de commande 4 ayant un microcontrôleur électronique 5, qui reçoit des ordres d'un calculateur électronique 6 du véhicule, par l'intermédiaire d'un bus multiplexé 7 de type CAN.

Ce calculateur 6 peut être une unité centrale de contrôle de l'habitacle assurant la distribution de l'alimentation électrique au moyen de trois relais :
- un relais 60 de commande du circuit d'alimentation électrique du moteur, dit relais après contact "+ APC", alimentant l'unité 61 de contrôle du moteur, l'air-bag 62, le tableau de bord entre autres ;
- un deuxième relais 63 de servitude "+ SERV" pour l'alimentation notamment de la radio 64, des lève-vitres 65, du groupe 70 moto-ventilateur GMV de l'habitacle, etc.
   Il alimente de plus l'antivol électrique que constitue le système de verrouillage de la direction ;
- un troisième relais 66 de démarrage "+ DEM" pour l'alimentation du démarreur 67 du moteur 68. L'unité 61 de contrôle moteur communique à l'unité de contrôle de l'habitacle une information sur l'état du moteur, qui est arrêté ou tournant.

Pour sécuriser le système de verrouillage de la direction, l'invention adjoint au pène des moyens de blocage mécanique de son déplacement lorsqu'il doit laisser la colonne en libre rotation. Ces moyens sont constitués par un noyau magnétique 9 placé au centre d'un solénoïde 8, ledit noyau étant mobile sous l'effet du champ magnétique créé par un courant circulant dans la bobine et rappelé vers sa position d'équilibre stable par un ressort 10, dont l'extrémité 11 opposée au noyau 9 est fixe. Le courant dans la bobine 8 est piloté par l'unité centrale d'habitacle 6 par l'intermédiaire d'un transistor de commande 12, situé dans l'unité centrale même.

Au repos, sans courant dans la bobine 8, le noyau magnétique 9 n'est soumis qu'au ressort 10 qui le positionne de telle sorte qu'il dépasse largement de la bobine.

Pour bloquer le pène 30, les moyens de blocage doivent être positionnés de telle sorte que le noyau est placé juste devant la pièce mécanique 3, le long de sa face 33 perpendiculaire à la direction de déplacement du pène 30.

Quand l'unité centrale 6 commande le courant dans la bobine 8, le noyau magnétique 9 se déplace de telle sorte qu'il s'escamote dans le solénoïde pour laisser libre le déplacement du pène vers la colonne de direction 1, puis le courant est coupé et le noyau 9 est retenu par la face 34 de la pièce mécanique 3 parallèle à la direction de déplacement du pène.

Le système de verrouillage selon l'invention comporte également un capteur 13 de la position des moyens de blocage, destiné à délivrer une information sur la position stable du noyau magnétique 9, donc dépassant de la bobine 8, pour sécuriser la position déverrouillée de la direction.

Le système comporte aussi un capteur double 14 de la position du pène, destiné à délivrer d'une part une information sur la position armée du pène 3 qui bloque la colonne de direction 1 et d'autre part une information sur sa position rentrée laissant la colonne libre en rotation.

Le circuit de commande 4 des moyens de verrouillage 2 comprend un microcontrôleur électronique 5 qui reçoit à la fois les informations de position du pène 3 et du noyau magnétique 9, en provenance de leurs capteurs respectifs 14 et 13, ainsi que des informations indispensables à la définition des conditions de sécurité en provenance des différents micontrôleurs via le bus multiplexé CAN. Ces informations sont la vitesse du véhicule, l'état de fonctionnement du moteur et la détection de choc.

En effet, selon l'invention, le circuit de commande 4 des moyens de verrouillage 2 de la colonne de direction, avant d'autoriser un verrouillage demandé par l'unité centrale d'habitacle 6, vérifie les informations suivantes qui lui parviennent par le bus multiplexé, indépendamment des informations qu'envoie l'unité centrale elle-même :
- la vitesse du véhicule existe et est de valeur nulle, qui est une information délivrée par le microcontrôleur du système d'antiblocage 69 de roues ABS, ou par un capteur de vitesse de roues situé dans la transmission,
- le moteur ne tourne pas, qui est une information délivrée par le calculateur de contrôle moteur 61 ;
- aucun accident, choc ou avarie n'est arrivé ayant déclenché des moyens de protection, qui est une information envoyée par le microcontrôleur de l'airbag 62.

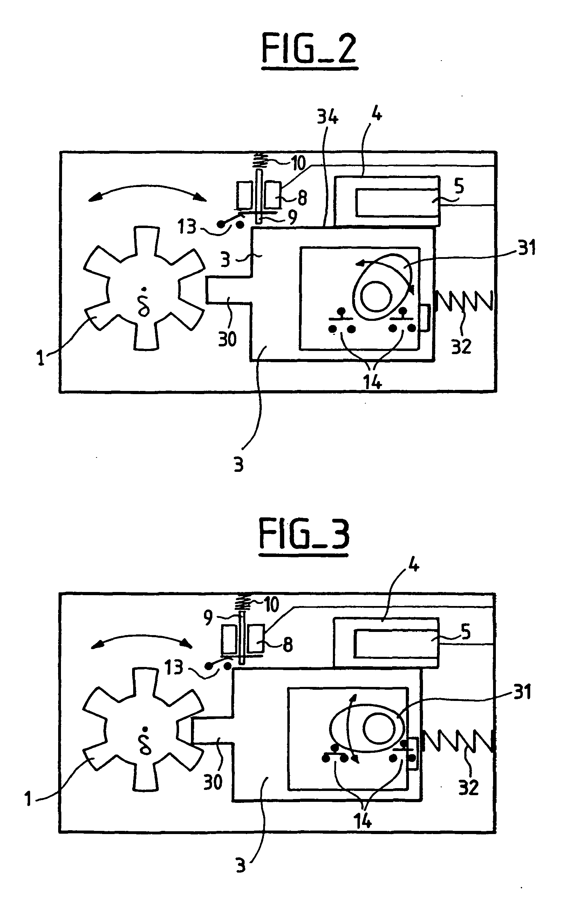

Si toutes les conditions de sécurité requises sont remplies, le microcontrôleur 5 des moyens 4 de verrouillage de la direction attend que les moyens de verrouillage ne bloquent plus le pène 30, donc que le noyau magnétique 9 soit escamoté dans la bobine 8, pour autoriser la commande du pène (figure 2).

Le pène 30 est alors poussé par le ressort 32, au moyen d'un mouvement de rotation de l'excentrique 31 qui libère le pène vers la position de verrouillage de la colonne de direction 1 (figure 3).

Ainsi, si l'unité centrale de l'habitacle 6 envoyait un ordre de verrouillage de la direction, à tort, aux moyens de verrouillage par le pène, cet ordre ne serait pas exécuté, sauf si les conditions de sécurité précédemment énoncées étaient remplies pour le conducteur, c'est-à-dire vitesse nulle du véhicule, moteur arrêté, pas d'incident d'air-bag et pas d'accident. Grâce à cette architecture du système selon l'invention, une panne logicielle de type déroutement de code ne peut jamais entraîner un blocage de la colonne de direction en roulant. De même, une panne simple électrique ne peut pas non plus provoquer le verrouillage de la direction. Ainsi, s'il se produit par exemple un court-circuit à l'intérieur du circuit de commande de l'excentrique et que ce court-circuit entraîne une commande dans le sens verrouillage, alors l'armement ne peut pas se produire car le noyau 9 empêche la translation de la pièce 3. Egalement, s'il se produit un court-circuit dans le câblage et que ce court-circuit entraîne la commande fortuite du solénoïde 8, alors il n'y pas de déplacement du pène 30 car la commande de l'excentrique est indépendante et interne au système de verrouillage.

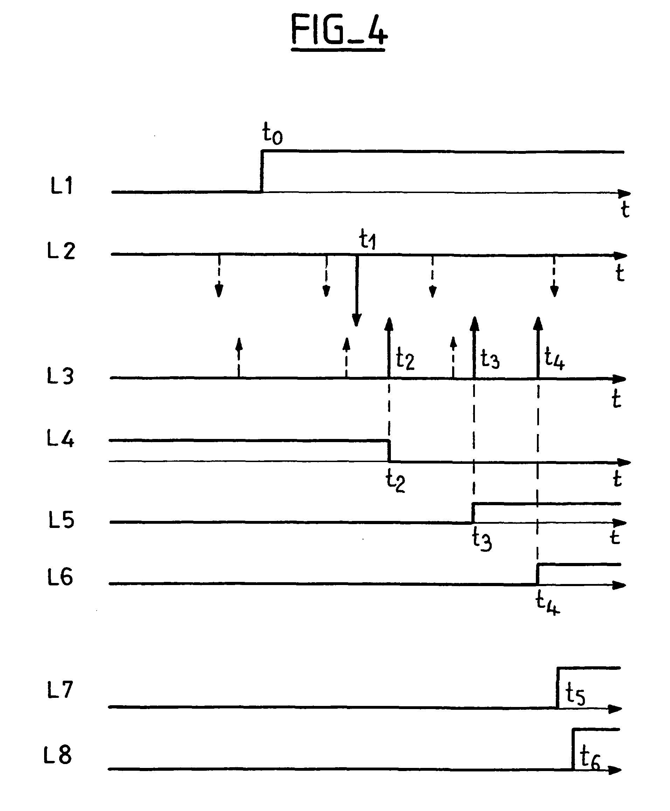

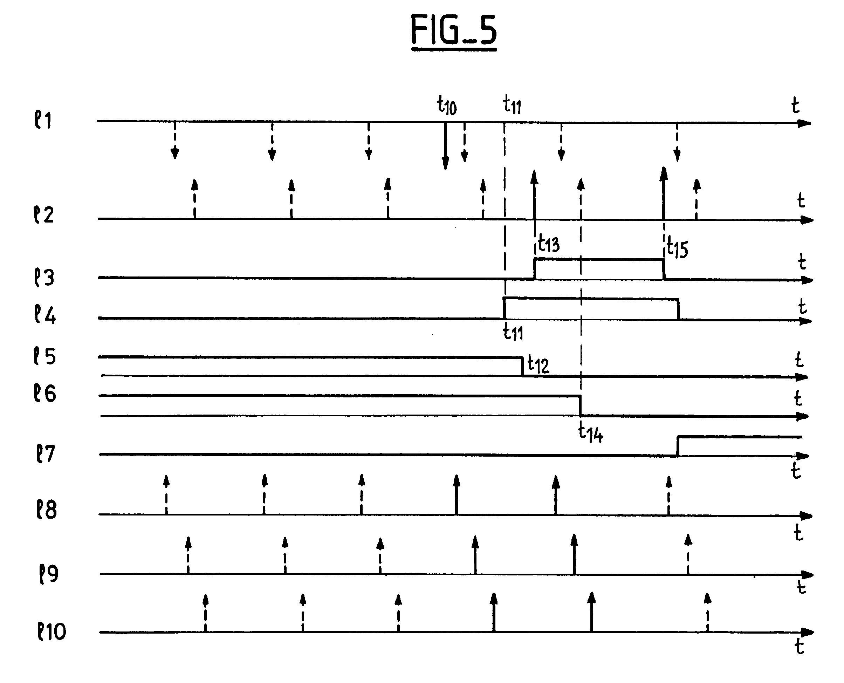

Un second objet de l'invention est un procédé de verrouillage de la colonne de direction mettant en oeuvre le système décrit précédemment, qui comprend différentes étapes au cours de la phase de déverrouillage de la direction d'une part (figure 4), et de la phase de verrouillage d'autre part (figure 5).

En phase de déverrouillage, par exemple lorsque le conducteur entre dans son véhicule pour le faire démarrer, il envoie un code personnalisé servant à l'identifier.

Après son identification, à l'instant t₀, l'unité centrale de l'habitacle 6 envoie une commande de déverrouillage de la direction sur le bus multiplexé CAN 7, à l'instant t₁.

Cette commande est ensuite lue à l'instant t₂ par le microcontrôleur 5 des moyens de verrouillage 4 et exécutée immédiatement, si le code d'identification est reconnu. L'excentrique 31 tourne d'un demi-tour et déplace le pène 30 qui débloque la colonne de direction. Le pène passe ainsi de la position de verrouillage de la colonne, retenant le noyau 9 dans la bobine 8, à la position de déverrouillage, libérant le noyau hors de la bobine qui est maintenu en dehors par le ressort. Il sécurise la position déverrouillée du pène qui est bloqué en position rentrée et ne peut plus être armé à l'instant t₄.

Les positions respectives du pène 30 et du noyau 9 sont ensuite transmises par les capteurs respectifs 14 et 13 vers le microcontrôleur 5 les envoyant sur le bus multiplexé 7 à l'unité centrale de l'habitacle 6, qui serveille les changements d'état sur ces informations concernant le pène rentré et les moyens de blocage engagés en vue d'un éventuel démarrage du moteur. En effet, il doit y avoir une transition sur ces deux informations attestant que la direction est bien débloquée, pour que l'unité centrale autorise le démarrage.

La figure 4 est un chronogramme des états des différents éléments du système de verrouillage selon l'invention. En phase de déverrouillage, la première ligne L1 en haut du chronogramme représente l'information d'identification du conducteur, qui passe de l'état 0 à l'état 1 quand ce dernier est bien reconnu à l'instant t₀; la deuxième ligne L2 représente les ordres envoyés par l'unité centrale de l'habitacle 6 au microcontrôleur des moyens de verrouillage de la direction, soit l'ordre de déverrouillage à l'instant t₁. La troisième ligne L3 représente les informations que le microcontrôleur des moyens de verrouillage envoie par le bus CAN à l'unité centrale de l'habitacle, soit l'exécution de la commande de déverrouillage à l'instant t₂, le changement d'état de la position du noyau constaté par le capteur 13 à l'instant t₃ et le blocage du pène rentré à l'instant t₄. Les flèches en pointillés représentent des messages périodiques envoyés sur le bus de multiplexage.

Les quatrième L4 et sixième L6 lignes représentent le changement d'état du pène, observé par le double capteur de position, qui passe pour la position "armé", de l'état 1 à l'état 0 à l'instant t₂ et qui passe pour la position "rentré" de l'état 0 à l'état 1 à l'instant t₄.

La cinquième ligne L5 représente le changement d'état du noyau magnétique destiné à bloquer le pène, qui passe de l'état 0, correspondant à sa position rentrée dans la bobine parcourue par un courant, à l'état 1 correspondant à sa position sortie bloquant mécaniquement le pène, à l'instant t₃.

A l'instant t₅, le relais "+ APC" de mise sous contact électrique du véhicule est activé (septième ligne L7) et à l'instant t₆, l'unité centrale d'habitacle autorise le démarrage du moteur (huitième ligne L8).

En phase de verrouillage de la colonne de direction, lorsque le conducteur souhaite par exemple sortir de son véhicule, l'unité centrale 6 de l'habitacle envoie une commande de verrouillage à l'instant t₁₀ aux moyens de verrouillage, par l'intermédiaire du bus CAN. La première ligne l₁ du chronogramme de la figure 5 représente les trames émises par l'unité centrale 6 vers les moyens de verrouillage. La deuxième ligne l₂ représente les informations que le microcôntroleur des moyens de verrouillage envoie par le bus CAN à l'unité centrale de l'habitacle. Les flèches en pointillés correspondent aux messages périodiques envoyés sur le bus CAN.

Lorsque la colonne de direction est encore déverrouillée, le pène 30 est rentré, donc le capteur de position montre une information à l'état 1 sur la sixième ligne 16 et une information à l'état 0 sur la septième ligne l₇ correspondant à un état "armé", et le noyau magnétique 9 est sorti pour le bloquer, donc la bobine 8 n'est pas parcourue par un courant et sa commande par l'unité centrale d'habitacle 6 est à l'état 0 (quatrième ligne l₄).

A partir de l'instant t₁₀, le microcontrôleur des moyens de verrouillage de la direction lit cette commande et attend que le noyau soit rentré, libérant le pène à l'instant t₁₁ sur commande de l'unité centrale d'habitacle, après une temporisation de l'ordre de 100 ms par exemple après l'ordre de verrouillage.

Pendant cette temporisation, le microcontrôleur des moyens de verrouillage effectue les vérifications de sécurité, c'est-à-dire lit les trames émises par le calculateur du système ABS (huitième ligne l₈), par le calculateur du contrôle moteur (neuvième ligne l₉) et par celui de l'airbag (dixième ligne l₁₀). Si les conditions de sécurité requises sont effectivement remplies, et que le changement d'état sur la position du noyau bloquant le pène est constaté, à l'instant t₁₂ d'après l'information du capteur de position (cinquième ligne l₅), le microcontrôleur commande l'armement du pène à l'instant t₁₃ et envoie une trame par le bus CAN.

A partir de cet instant t₁₃ de verrouillage de la colonne de direction, la commande de l'excentrique vers la sortie du pène passe de l'état 0 à l'état 1 (troisième ligne l₃), la commande du noyau est à l'état 1, sa position "sorti" est à l'état 0, le pène passe de la position "rentré" jusqu'à t₁₄ à la position "armé" à l'instant t₁₅ sous la commande de l'excentrique. A cet instant, l'excentrique n'a plus besoin d'être commandé puisque le pène bloque la colonne de direction, donc l'état de sa commande repasse à 0. De même, le noyau étant soulevé, l'unité centrale d'habitacle n'a plus besoin de commander le courant dans la bobine qui repasse à l'état 0 (quatrième ligne l₄) car le noyau est bloqué mécaniquement par la surface 34 de la pièce mécanique 3.

Les moyens de blocage du pène, constitués par le solénoïde dont le noyau vient coincer le pène lorsque celui-ci est rentré, en phase de déverrouillage de la direction, sont gérés par l'unité centrale d'habitacle. Pour autoriser l'armement du verrouillage de la direction, l'unité centrale excite électriquement la bobine, par contre, pour le déverrouillage de cette direction, le noyau n'est pas commandé électriquement mais simplement soumis à l'action du ressort qui le maintient en dehors de la bobine, afin d'assurer la sécurité de la position déverrouillée du pène.

Grâce au système de verrouillage selon l'invention, le mouvement du pène pour verrouiller la colonne de direction n'est autorisé que lorque les moyens de verrouillage en reçoivent l'ordre de la part de l'unité centrale d'habitacle. Par contre, lorsque la colonne de direction doit être déverrouillée, notamment lorsque le moteur tourne et que le véhicule roule, le pène ne peut physiquement pas quitter sa position de pène rentré puisque des moyens de blocage l'empêchent mécaniquement de s'armer, sans avoir besoin eux-mêmes d'être commandés électriquement. Ce système assure donc une excellente sécurité.

De plus, cette solution a pour avantages d'utiliser les calculateurs ou microcontrôleurs existant dans le véhicule, ainsi que le bus multiplexé CAN, ce qui réduit les coûts du circuit de commande des moyens de verrouillage, tout en assurant un très haut niveau de sécurité.

## Revendications

1. Système de verrouillage de la colonne de direction d'un véhicule, comprenant des moyens de verrouillage électro-mécanique en rotation de la colonne à partir d'une pièce mécanique mobile munie d'un pène, pilotés par un circuit électronique de commande recevant des ordres d'un calculateur électronique par l'intermédiaire d'un bus multiplexé CAN, **caractérisé en ce qu'**il comporte de plus :
- des moyens de blocage mécanique du déplacement du pène (30) lorsque la direction est en position déverrouillée, pilotés par le calculateur électronique (6) au moyen d'un transistor de commande (12),
- un capteur (13) de la position des moyens de blocage,
- un capteur double (14) de la position du pène,
- un circuit électronique de commande (4) des moyens de verrouillage de la colonne de direction (1), comprenant un microcontrôleur (5) qui reçoit d'une part l'information de position des moyens de blocage et d'autre part des informations à la fois sur la vitesse du véhicule, sur l'état du moteur et sur la détection de choc par l'intermédiaire du bus multiplexé CAN (7).

2. Système de verrouillage selon la revendication 1, **caractérisé en ce que** les moyens de blocage mécanique du déplacement du pène (30) de verrouillage de la colonne de direction (1) sont constitués par un noyau en fer doux (9) retenu à une de ses extrémités par un ressort (10) fixe par rapport au pène (30) et destiné à se déplacer perpendiculairement à la direction de déplacement du pène sous l'effet du champ magnétique créé à l'intérieur d'un solénoïde (8) parcouru par un courant variable, de telle sorte que :
- en phase de déverrouillage de la direction, le noyau (9) est en position d'équilibre stable, aucun courant ne circulant dans la bobine, il est soumis uniquement à l'action du ressort qui le positionne juste devant la pièce mécanique (3), le long de sa face (33) perpendiculaire à la disposition de déplacement du pène (30) dans le but de bloquer son déplacement, et
- en phase de verrouillage de la direction, le noyau (9) se déplace sous l'effet du champ magnétique, créé par le courant circulant dans le solénoïde (8), en rentrant à l'intérieur dudit solénoïde pour libérer le déplacement du pène (30) vers la colonne de direction (1), puis est retenu mécaniquement par la surface (34) de la pièce mécanique (3) parallèle à la direction de déplacement du pène, en l'absence de courant dans la bobine (8).

3. Système de verrouillage selon la revendication 1, **caractérisé en ce que** le microcontrôleur (5) du circuit de commande (4) des moyens de verrouillage de la direction reçoit, par l'intermédiaire du bus multiplexé CAN (7), les informations suivantes :
- la vitesse du véhicule, délivrée par le système d'antiblocage des roues (ABS) ou par un capteur de vitesse ;
- l'état du moteur, tournant ou à l'arrêt, délivré par le calculateur de contrôle moteur (61) ;
- la détection d'un choc, délivrée par le microcontrôleur de l'airbag.

4. Système de verrouillage selon la revendication 1, **caractérisé en ce que** le calculateur électronique pilotant les moyens de verrouillage de la colonne de direction (1) est une unité centrale de contrôle de l'habitacle (6), qui commande le courant circulant dans le solénoïde (8), par l'intermédiaire d'un transistor de commande (12).

5. Procédé de fonctionnement d'un système de verrouillage de la colonne de direction d'un véhicule selon aux moins une des revendications précédentes, **caractérisé en ce qu'**il comporte les étapes suivantes :
a) pour le déverrouillage de la direction :
- après identification du conducteur, envoi d'une commande de déverrouillage de la direction sur le bus multiplexé CAN par le calculateur électronique,
- lecture de cette commande par le microcontrôleur des moyens de verrouillage et exécution immédiate, déplaçant le pène qui débloque la colonne de direction et libère les moyens de blocage du pène,
- surveillance des changements d'état sur les informations délivrées par les capteurs de position du pène et des moyens de blocage en vue d'un éventuel démarrage du moteur du véhicule,
b) pour le verrouillage de la direction :
c) envoi d'une commande de verrouillage sur le bus multiplexé CAN par le calculateur électronique,
- lecture de ladite commande par le microcontrôleur des moyens de verrouillage,
- après une temporisation, envoi par le transistor de commande du calculateur électronique d'une commande de déblocage du pène par les moyens de blocage,
- vérification des conditions de sécurité par le microcontrôleur des moyens de verrouillage,
- commande, par le microcontrôleur des moyens de verrouillage, du blocage de la direction par le pène.

## Claims

1. Locking system for locking the steering column of a vehicle, comprising means for electromechanically locking the rotation of the column by way of a movable mechanical part equipped with a bolt, said means being controlled by an electronic control circuit which receives commands from an electronic computer via a multiplexed CAN bus, **characterized in that** it also comprises:
- means for mechanically blocking the displacement of the bolt (30) when the steering system is in the unlocked position, said means being controlled by the electronic computer (6) by means of a control transistor (12),
- a sensor (13) for sensing the position of the blocking means,
- a double sensor (14) for sensing the position of the bolt,
- an electronic control circuit (4) for controlling the means for locking the steering column (1), said circuit comprising a microcontroller (5) which receives on the one hand the information concerning the position of the blocking means and on the other hand information concerning the speed of the vehicle, the state of the engine and the detection of any impact, via the multiplexed CAN bus (7).

2. Locking system according to Claim 1, **characterized in that** the means for mechanically blocking the displacement of the bolt (30) for locking the steering column (1) consist of a soft iron core (9) which is held at one of its ends by a spring (10) which is fixed with respect to the bolt (30), said core being designed to be displaced perpendicularly to the direction of displacement of the bolt under the effect of the magnetic field created inside a solenoid (8) which is flowed through by a variable current, such that:
- in the unlocked phase of the steering system, the core (9) is in a stable equilibrium position with no current flowing in the coil, it is subjected only to the action of the spring which positions it just in front of the mechanical part (3), along its face (33) which is perpendicular to the direction of displacement of the bolt (30), with the aim of blocking displacement of the latter, and
- in the locked phase of the steering system, the core (9) is displaced under the effect of the magnetic field created by the current flowing in the solenoid (8), retracting into the interior of said solenoid so as to free the displacement of the bolt (30) towards the steering column (1), then it is held mechanically by the surface (34) of the mechanical part (3) which is parallel to the direction of displacement of the bolt, in the absence of current in the coil (8).

3. Locking system according to Claim 1, **characterized in that** the microcontroller (5) of the control circuit (4) for the means for locking the steering system receives the following information via the multiplexed CAN bus (7):
- the speed of the vehicle, supplied by the anti-lock braking system (ABS) of the wheels or by a speed sensor;
- the state of the engine, running or idle, supplied by the engine control computer (61);
- the detection of any impact, supplied by the airbag microcontroller.

4. Locking system according to Claim 1, **characterized in that** the electronic computer which controls the means for locking the steering column (1) is a passenger compartment central control unit (6) which controls the current flowing in the solenoid (8) via a control transistor (12).

5. Method of operating a locking system for locking the steering column of a vehicle according to at least one of the preceding claims, **characterized in that** it comprises the following steps:
a) for unlocking the steering system:
- following identification of the driver, sending of a steering system unlock command over the multiplexed CAN bus by the electronic computer,
- reading of this command by the microcontroller of the locking means, and immediate execution, displacing the bolt which unblocks the steering column and frees the bolt blocking means,
- monitoring any state changes on the information supplied by the sensors for sensing the position of the bolt and of the blocking means, with a view to possible starting of the engine of the vehicle,
b) for locking the steering system:
- sending of a lock command over the multiplexed CAN bus by the electronic computer,
- reading of said command by the microcontroller of the locking means,
- after a time delay, sending by the electronic computer control transistor of a command for unblocking of the bolt by the blocking means,
- verification of safety conditions by the microcontroller of the locking means,
- command from the microcontroller of the locking means for blocking of the steering system by the bolt.

## Patentansprüche

1. Verriegelungssystem für die Lenksäule eines Fahrzeugs, mit einer Einrichtung zur elektromechanischen Drehverriegelung der Säule aus einem mit einem Riegel versehenen, beweglichen mechanischen Bauteil, die durch eine elektronische Steuerschaltung gesteuert wird, welche mittels eines CAN-Multiplex-Busses Befehle von einem elektronischen Rechner erhält, **dadurch gekennzeichnet, dass** dieses ferner umfasst:
- Mittel zur mechanischen Blockierung der Verstellung des Riegels (30), wenn sich die Lenkung in einer entriegelten Position befindet, die durch den elektronischen Rechner (6) mithilfe eines Steuertransistors (12) gesteuert werden,
- einen Sensor (13) für die Position der Blockiermittel,
- einen Doppelsensor (14) für die Position des Riegels,
- eine elektronische Steuerschaltung (4) für die Verriegelungseinrichtung der Lenksäule (1), mit einem Mikrosteuerbaustein (5), der mithilfe des CAN-Multiplex-Bus (7) einerseits eine Information über die Position der Blockiermittel und andererseits Informationen zugleich über die Geschwindigkeit des Fahrzeugs, über den Motorzustand und über die Aufprallerfassung erhält.

2. Verriegelungssystem nach Anspruch 1, **dadurch gekennzeichnet, dass** die mechanischen Blockiermittel für die Verschiebung des Riegels (30) zur Verriegelung der Lenksäule (1) durch einen Weicheisenkern (9) gebildet werden, der an einem seiner Enden durch eine Feder (10) gehalten wird, die im Verhältnis zum Riegel (30) festliegt und dazu bestimmt ist, sich senkrecht zur Verschiebungsrichtung des Riegels unter dem Einfluss des Magnetfeldes zu verschieben, das im Inneren eines durch einen variablen Strom durchlaufene Solenoids (8) erzeugt wird, derart, dass:
- in der Verriegelungsphase der Lenkung, sich der Kern (9) in einer stabilen Gleichgewichtslage befindet, wobei in der Spule kein Strom fließt, dieser allein der Wirkung der Feder ausgesetzt ist, welche diesen genau vor dem mechanischen Bauteil (3) positioniert, längs seiner zur Verschiebungsrichtung des Riegels (30) senkrechten Fläche (33), mit dem Ziel, seine Verschiebung zu blockieren, und
- in der Verriegelungsphase der Lenkung, sich der Kern (9) unter dem Einfluss des Magnetfeldes, das durch den in dem Solenoid (8) fließenden Strom erzeugt wird, verschiebt und in das Innere des Solenoids zurückfährt, um die Verschiebung des Riegels (30) in Richtung der Lenksäule (1) frei zu geben und dann durch die Oberfläche (34) des mechanischen Bauteils (3) parallel zur Verschiebungsrichtung des Riegels mechanisch gehalten wird, wenn kein Strom in der Spule (8) vorhanden ist.

3. Verriegelungssystem nach Anspruch 1, **dadurch gekennzeichnet, dass** der Mikrosteuerbaustein (5) der Steuerschaltung (4) der Verriegelungseinrichtung der Lenkung mithilfe des CAN-Multiplex-Busses (7) die folgenden Informationen erhält:
- die Geschwindigkeit des Fahrzeugs, geliefert durch das Antiblockiersystem der Räder (AB S) oder durch einen Geschwindigkeitssensor;
- den Motorzustand, laufend oder stehend, geliefert durch den Rechner der Motorsteuerung (61);
- die Erfassung eines Aufpralls, geliefert durch den Mikrosteuerbaustein des Airbags.

4. Verriegelungssystem nach Anspruch 1, **dadurch gekennzeichnet, dass** der elektronische Rechner, der die Verriegelungseinrichtung der Lenksäule (1) steuert, eine zentrale Steuereinheit (6) für die Fahrzeugkarosserie ist, die den im Solenoid (8) fließenden Strom mithilfe eines Steuertransistors (12) steuert.

5. Verfahren zum Betrieb eines Verriegelungssystem der Lenksäule eines Fahrzeugs gemäß wenigstens einem der vorstehenden Ansprüche, **dadurch gekennzeichnet, dass** dieses die folgenden Schritte umfasst:
a) für die Entriegelung der Lenkung:
- nach Identifikation des Fahrers, Sendung eines Entriegelungsbefehls an die Lenkung über den CAN-Multiplex-Bus durch den elektronischen Rechner,
- Lesen dieses Befehls durch den Mikrosteuerbaustein der Verriegelungseinrichtung und sofortige Ausführung, indem der Riegel verschoben wird, was die Lenksäule entsperrt und die Blockiermittel des Riegels freigibt,
- Überwachung von Zustandsveränderungen bei den Informationen, die durch die Positionssensoren des Riegels und der Blockiermittel geliefert werden, im Hinblick auf ein mögliches Starten des Motors des Fahrzeugs,
b) für die Verriegelung der Lenkung:
c) Sendung eines Verriegelungsbefehls durch den elektronischen Rechner auf dem CAN-Multiplex-Bus,
- Lesen des Befehls durch den Mikrosteuerbaustein der Verriegelungseinrichtung,
- nach einer Verzögerungszeit, Senden eines Befehls zur Entsperrung des Riegels durch die Blockiermittel mittels des Steuertransistors des elektronischen Rechners,
- Verifikation der Sicherheitszustände durch den Mikrosteuerbaustein der Verriegelungseinrichtung,
- Steuern der Blockierung der Lenkung durch den Riegel mittels des Mikrosteuerbausteins der Verriegelungseinrichtung.
